(19) Europäisches Patentamt
European Patent Office
Office européen des brevets

(11) EP 2 369 288 A1

(12) EUROPEAN PATENT APPLICATION

(43) Date of publication:
28.09.2011 Bulletin 2011/39

(51) Int Cl.:
*F28D 20/02* (2006.01)

(21) Application number: 10156250.2

(22) Date of filing: 11.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: SIEMENS AKTIENGESELLSCHAFT
80333 München (DE)

(72) Inventor: Stiesdal, Henrik
5000 Odense C (DK)

(54) **Energy transfer system comprising a phase change material**

(57) It is described an energy transfer system (100, 200, 300, 500) for absorbing, temporarily storing and releasing energy. The described energy transfer system (100, 200, 300, 500) comprises (a) a first container (110) containing a Phase Change Material (115), (b) a heat generation element (130), which is connectable to an external energy source (170) and which is capable of charging the Phase Change Material (115) with thermal energy, wherein energy provided by the external energy source (170) is used, and (c) a heat extraction element (140), which is connectable to an external heat engine (180) and which is capable of extracting thermal energy from the Phase Change Material (115), wherein the external heat engine (180) is capable of converting the extracted thermal energy into electric energy. It is further described an energy transfer arrangement comprising two of such energy transfer systems, and a method for absorbing, temporarily storing and releasing energy.

FIG 2

EP 2 369 288 A1

## Description

Field of invention

The present invention relates to the field temporarily storing thermal energy. In particular the present invention relates to an energy transfer system for absorbing, temporarily storing and releasing energy. Further, the present invention relates to an energy transfer arrangement comprising two of such energy transfer systems. Furthermore, the present invention relates to a method for absorbing, temporarily storing and releasing energy.

Art Background

The production of electric power from various types of alternative energy sources such as wind turbines, solar power plants and wave energy plants is not continuous. The production may be dependent on environmental parameters such as wind speed (for wind turbines), insulation (for solar power plant) and wave height and direction (for wave energy plants). There is very often little or no correlation between energy production and energy demand.

One known approach to solve the problem of uncorrelated electric power production and electric power demand is to temporally store energy, which has been produced but which has not been demanded, and to release the stored energy at times at which there is a high demand. In the past there have been suggested many different methods to temporarily store energy. Suggested methods are for instance (a) mechanical energy storage methods e.g. pumped hydro storage, compressed air storage and flywheels, (b) chemical energy storage methods e.g. electrochemical batteries and organic molecular storage, (c) magnetic energy storage, and (d) thermal energy storage.

With respect to thermal energy storage it is noted that water has a high heat capacity which in principle could allow for efficient thermal storage using water as the heat storage material or heat storage medium. However, unless sophisticated pressure vessels are used the maximum temperature of heat capacity storage in water is limited to 100°C (100 degrees Celsius). Since for large capacity storage the cost of pressure vessels would be prohibitive, the use of water as a heat storage material is limited to a maximum temperature of 100°C. However, a maximum temperature of 100°C is much too low in order to provide any useful thermodynamic efficiency of a heat engine, e.g. a steam turbo generator, which is to be operated on demand for release of the stored thermal energy. Consequently, the benefits of the high heat capacity of water cannot be exploited in practice for high-volume energy storage.

Alternative heat storage media include solids and molten salts. Solids may be heated to high temperatures that could lead to good thermodynamic efficiencies of related heat engines. However, solids generally have low heat capacity, and this leads to high volume requirements and to a low energy density. Molten salts generally have higher heat capacity than solids and they have the additional benefit that, when being in the liquid phase, they can be pumped, thereby facilitating arrangements of low-loss storage tanks with high-power heat exchangers. However, molten salts have the drawback that they are generally not stable at temperatures much above 400°C, thereby limiting the thermodynamic efficiencies of related heat engines. They also have the drawback that initial melting and re-melting on unintended solidification is very difficult due to the low conductivity of crystalline salts.

One solution to the problem of low energy density of solids is to use a material that incurs a phase change at the relevant operating temperature. The amount of heat respectively heat energy $Q$ stored in a material which does not undergo a phase change within the temperature range of a heat storage cycle, i.e. during an energy storage process comprising the increase of the storage material temperature from Ti (corresponding to the minimum starting or initial temperature) to Tf (corresponding to the maximum end or final temperature) can be calculated by the following equation (1):

$$Q = \int_{Ti}^{Tf} m \cdot Cp(T)dT \qquad (1)$$

Thereby, $m$ is the mass of the heat storage material and $Cp(T)$ is the specific heat capacity of the heat storage material, which according to the basics of thermodynamic is a function of the temperature T.

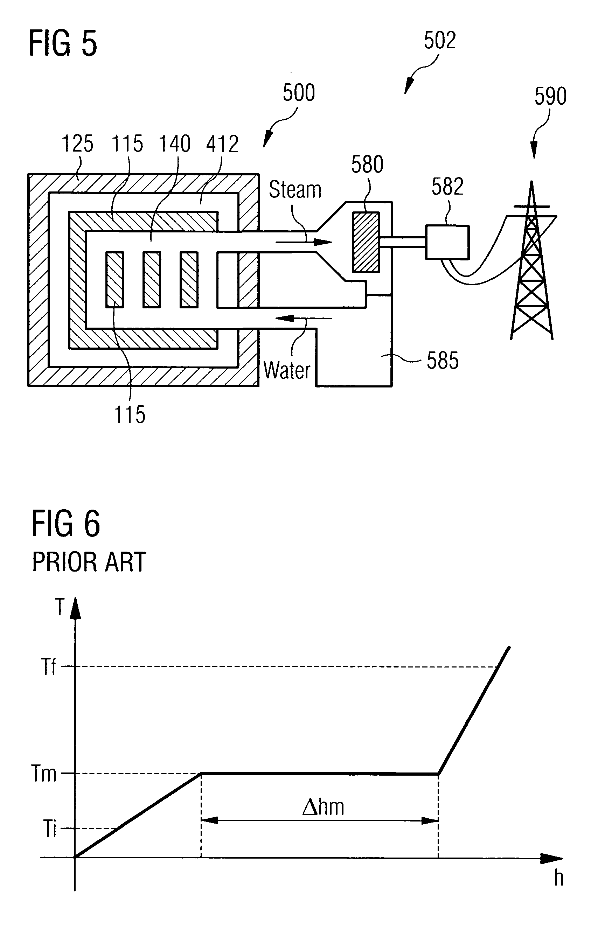

Provided that the specific heat capacity of the heat storage material does not have a pronounced dependency on temperature, this leads to a linear relation between the increase in temperature and the amount of stored heat. For a material or medium which does undergo a phase change during the heat storage cycle an additional energy is absorbed or released when the material melts or solidifies respectively. The melting and solidification process happens at a substantially constant temperature as indicated in Figure 6. Such a material is denominated a Phase Change Material (PCM). Figure 6 illustrates how heat is absorbed or released by a PCM when the PCM undergoes a phase change from solid to liquid and back or from liquid to solid. Specifically, when starting at the solid phase at a temperature $Ti$, the temperature of the PCM first approximately linearly increases with the amount of heat input $h$. When the temperature has reached the melting temperature $Tm$, the temperature stays constant for a while until the fusion heat or melting heat $\Delta hm$ has been absorbed and all the PCM has become liquid. After this, the temperature of the liquid PCM again linearly increases with the further amount of heat input $h$. It is mentioned that the gradient $dT/dh$ is different for liquid phase as compared to the solid phase. Thereby, the gradient $dT/dh$ corresponds to the specific heat capacity of the solid respectively the liquid PCM.

For heat storage purposes preferably a PCM material is employed, which comprises a high melting heat. Thereby, additional energy storage capacity is provided by the phase change, i.e. when the PCM changes from solid to liquid and back. For a temperature increase of a PCM from $Ti$ to $Tf,$ wherein the melting temperature $Tm$ of the PCM in between $Ti$ and $Tf$, the amount of heat Q which is stored in the PCM can be calculated by the following equation (1):

$$Q = \int\limits_{Ti}^{Tm} m \cdot Cps(T)dT + m\Delta hm + \int\limits_{Tm}^{Tf} m \cdot Cpl(T)dT \qquad (2)$$

Thereby, $m$ is again the mass of the PCM, $Cps\,(T)$ and $Cpl\,(T)$ are the specific heat capacity of the solid PCM respectively the liquid PCM and $\Delta h$ is the latent heat respectively the melting heat of the PCM.

One problem related to the known heat storage systems is that for large scale energy storage, such as for storing energy produced from wind farms for longer time periods (hours), the capacity of known heat storage systems is not sufficient. If one would scale up a known heat storage system to a system having sufficient capacity for such purposes, the prize of such a scaled up system would be relatively high, which makes a scaled up system unattractive because of economical reasons. Even further, for a scaled-up heat storage system it is difficult and not cost-effective to recover the stored energy.

There may be a need for providing a system and a method which allow for an improved heat storage capability.

Summary of the Invention

This need may be met by the subject matter according to the independent claims. Advantageous embodiments of the present invention are described by the dependent claims.

According to a first aspect of the invention there is provided an energy transfer system for absorbing, temporarily storing and releasing energy. The provided energy transfer system comprises (a) a first container containing a Phase Change Material, (b) a heat generation element, which is connectable to an external energy source and which is capable of charging the Phase Change Material with thermal energy, wherein energy provided by the external energy source is used, and (c) a heat extraction element, which is connectable to an external heat engine and which is capable of extracting thermal energy from the Phase Change Material, wherein the external heat engine is capable of converting the extracted thermal energy into electric energy.

The described energy transfer system is based on the idea that energy provided from an external source can be temporarily stored in the form of thermal energy within a Phase Change Material (PCM). If at a later time there is a demand for electric energy, at least some of the stored thermal energy can be released to an external heat engine.

The described energy transfer system may ensure that a surplus of energy, in particular electric energy, which may have been produced for instance by one or more wind turbines and/or by one or more solar plants at times with low demands for electricity, can be used to charge the PCM with thermal energy and thereby the surplus electricity can be stored as thermal energy respectively heat. Even further it is ensured by the described energy transfer system that the stored energy can be released and transferred to an external heat engine for use for electricity production. A suitable external heat engine may be for instance a steam turbine. The step of providing thermal energy from the PCM to an external heat engine may be regarded as providing or releasing thermal energy from the PCM.

The thermal energy can be stored in a single-phase energy storage process by temperature changes only. This means that the range of the temperature changes does not include the melting point temperature of the PCM. Alternatively, the thermal energy can be stored in a two-phase energy storage process, wherein in addition to one or two of the above described single-phase energy storage processes the energy is further stored in a latent energy storage process. This means that the range of a corresponding temperature change includes the melting point temperature of the PCM. Which energy storage process is preferably to be used depends on the specific application and in particular on the amount of energy put into the described energy transfer system for storage.

It is mentioned that in principle also a three-phase energy storage process is possible. This means that the range of the temperature changes includes both the melting point temperature of the PCM and the boiling point temperature of the PCM.

Preferably, the external energy source provides electric energy, which is converted into thermal energy by means of the heat generation element.

It is further mentioned that it is also possible that charging the PCM with thermal energy does not result in a temperature increase of the PCM. This is the case if at the beginning of the energy absorption the PCM has a temperature, at which already a phase change occurs. In this case the charged thermal energy is used only for a phase change of at least a portion of the PCM.

It is mentioned that in order to have a mechanically stable energy transfer system of course the first container has to be made from a material which has a higher melting temperature than the PCM at a maximum temperature of any possible heat storage circle.

It is further mentioned that in order to realize an effective insertion of thermal energy into the PCM two or even more heat generation elements may be used. The same applies for an effective heat extraction, which may be realized by employing two or even more heat extraction elements.

According to an embodiment of the invention the Phase Change Material comprises a metal, in particular aluminium. This may provide the advantage that the PCM has a comparatively high melting point temperature. Specifically, aluminum has a melting point temperature around 660°C and a latent heat coefficient which is relatively high. Therefore, aluminum is a suitable material for the described energy transfer system. Further, the level of the melting point temperature makes it feasible to provide appropriate containers and isolation material as well as heat generating and heat extraction elements which can operate optimal within a temperature range around the melting point of and exploit the excessive potential for latent energy storage.

It is mentioned that there are of course also other materials, which are suitable for being used as the PCM of the described energy transfer system. Specifically, PCMs which have a melting point between 200°C and 800°C are good candidates for the PCM of the described energy transfer system.

According to a further embodiment of the invention the first container is made at least partly from an iron alloy. The use of an iron alloy may provide the advantage that the first container comprises mechanical properties, which make the first container suitable for securely containing a PCM with a comparatively low melting point temperature. The PCM may be for instance aluminum which has a lower melting point temperature than iron.

According to a further embodiment of the invention the heat generation element comprises an inductor. This may mean that the heat generation element is or comprises an inductive element such as for instance a coil or at least a part of a coil.

Induction heating is a process of heating an electrically conducting material by electromagnetic induction. Thereby, eddy currents are generated within a conductive or metallic material and the ohmic resistance of the material leads to a heating of the material. Induction heating being used for putting or introducing thermal energy into the PCM may provide the advantage that this is a highly efficient process with a high degree of utility. Typically, the inductor of the heat generation element is powered by electric energy.

According to a further embodiment of the invention the energy transfer system further comprises (a) a second container, which encloses at least partly the first container, and (b) a thermal insulation material, which in arranged in between the first container and the second container.

This may provide the advantage that a good thermal isolation between the first container respectively the PCM and the surroundings of the described energy transfer system can be realized. Hereby it may be ensured that once having supplied energy to the PCM material for storage, the thermal insulation material ensures that energy is only lost only at an incremental rate to the surroundings during the storage of the thermal energy within the PCM.

According to a further embodiment of the invention the thermal insulation material comprises a composite ceramic material. This may provide the advantage that it can be ensured that thermal energy stored in the PCM is not released to the surroundings and it is also ensured that the insulation material has material properties suitable for the material to be used in the temperature range of suitable PCMs of the described energy transfer system.

The composite ceramic material may be for instance an air-bubbled ceramic material, which may be arranged between two layers of a ceramic material. Thereby, the ceramic material of the air-bubbled portion may be the same or may be different from the ceramic material of the layers.

According to a further embodiment of the invention at least a heating portion of the heat generation element is in physical contact with the Phase Change Material. This may provide the advantage that no extra intermediate heat distribution media has to be warmed up before the thermal energy is introduced into the PCM. Thereby, energy losses into an extra intermediate heat distribution media can be effectively avoided and all of the heat generated by the heating portion will be transferred to the PCM. Preferably, the whole heat generation element is in physical contact with the PCM.

The physical contact between the heating portion and the PCM allows that known and reliable techniques can be used for the introduction of thermal energy into the PCM. The thermal energy introduction can be realized for instance by means of a heating resistor respectively an electrical resistive heater.

According to a further embodiment of the invention at least an extracting portion of the heat extraction element is in physical contact with the Phase Change Material. A direct physical contact between the PCM and the heat extraction element may provide the advantage that substantially no losses occur in the process of transferring released thermal energy from the PCM to some means which can further distribute the released energy to the external heat engine for use and utilization.

According to a further embodiment of the invention the heat extraction element is a steam-liquid loop of the external heat engine. Thereby, the external heat engine is a part of a power production system.

The power production system may be a steam turbine. The steam turbine can be used for generating electric power.

By realizing the heat extraction element as a steam-liquid loop it may be ensured that the described energy transfer system is closely connected to a power production system whereby the utilization of released thermal energy is optimized with a high utilization ratio. Furthermore it is ensured that the released thermal energy can be utilized by known techniques.

Preferably the operating medium of the steam turbine is water. In this case the steam-liquid loop may be called a steam-water loop.

According to a further embodiment of the invention the power production system comprises a control mechanism, which is adapted for controlling a fluid flow within the steam-liquid loop.

The control mechanism may ensure that the amount of thermal energy can be controlled, which amount is released from the PCM and which amount is transferred to the external heat engine via the fluid travelling within in the loop. At the external heat engine the fluid can be used for driving the power production system and/or for cooling components of the power production system, which components are at an extreme high temperature.

The fluid may be in particular a steam and/or a liquid, in particular water, which is flowing through the liquid/water loop.

According to a further embodiment of the invention the energy provided by the external energy source is electric energy and the energy transfer system further comprises a frequency controller, which is adapted for controlling a frequency of a voltage and/or current being associated with the electrical energy provided by the external energy source.

This means that the described energy transfer system is capable of receiving electric energy from the external energy source. This makes it very easy to use a surplus of electricity, which has been produced for instance by wind turbine(s) or solar plant(s) at times with low demands, to charge the PCM with thermal energy such that the surplus of electricity can be stored as thermal energy. Even further, by controlling the frequency of the electrical energy applied to the heat generation element it is ensured that an optimal heating respectively thermal energy charging of the PCM can be obtained.

If the heat generation element comprises the above described inductor, i.e. the heat generation element is an induction heat generation element, the depth and the effect of the heat depends on the frequency of the applied electric power and can be adapted accordingly in order to realize an optimized introduction of thermal energy.

According to a further aspect of the invention there is provided an energy transfer arrangement for absorbing, temporarily storing and releasing energy. The provided energy transfer arrangement comprises (a) a first energy transfer system as described above and (b) a second energy transfer system as described above. The first energy transfer system and the second energy transfer system are arranged parallel with respect to each other.

The described energy transfer arrangement is based on the idea that a concatenated energy storage and transfer system can be provided, which comprises two or even more interconnected energy transfer systems as described above. By concatenating two or more of the above described energy transfer systems it can be ensured that a major energy storage and transfer system can be tailored to specific tasks and requirements. For instance if a specific major energy storage and transfer system with a capacity exceeding one of the above described energy transfer systems is required, then two or more of these systems can be concatenated in order to increase the total capacity of the concatenated major system.

It is mentioned that the parallel arrangement of the two energy transfer systems refers to a functional and not to a structural or geometric arrangement. This means that both energy transfer systems are directly connectable to the external energy source and both energy transfer systems are directly connectable to the external heat engine.

According to an embodiment of the invention (a) the heat generation element of the first energy transfer system and the heat generation element of the second energy transfer system are connected with each other and are connectable to the external energy source and/or (b) the heat extraction element of the first energy transfer system and the heat extraction element of the second energy transfer system are connected with each other and are connectable to the external heat engine.

Relating to the heat generation elements it can be ensured that the individual heat generation elements can be coupled to the external source e.g. in a parallel connection which in turn ensures that energy provided from the external energy source can be equally distributed to the various heat generation elements. Relating to the heat extraction elements it is ensured that the individual heat extraction elements can be coupled to the external source e.g. in a parallel connection.

According to a further aspect of the invention there is provided a method for absorbing, temporarily storing and releasing energy. The provided method comprises (a) charging a Phase Change Material with thermal energy, wherein the Phase Change Material is contained within a first container and wherein the thermal energy is introduced to the Phase Change Material by a heat generation element, which is connected to an external energy source and which receives energy from the external energy source, (b) temporarily storing the thermal energy within the Phase Change Material, (c) extracting thermal energy from the Phase Change Material by a heat extraction element, which is connected to an external heat engine, (d) transferring the extracted thermal energy to the external heat engine, and (e) converting the transferred thermal energy into electric energy by the external heat engine.

Also the described method is based on the idea that a surplus of energy can be stored for an amount of time and this surplus can be extracted, transferred and converted at a time at which the request for energy is higher. In other words, the step of (a) heating up the PCM or charging the PCM with thermal energy and the step of (b) extracting thermal energy from the PCM are carried out at different points in time.

Furthermore, the described method may also be carried out under conditions where only a partial phase change of the PCM occurs. Such a partial phase change means that the PCM is not completely melted when being charged with thermal energy and/or when being heated up. Accordingly, when energy is extracted from the PCM not the complete PCM is solidified.

It is mentioned that the extracted thermal energy from the PCM may in addition be provided for the simple use of direct heating processes such as for residential and/or for industrial heating and cooling.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1 shows the main components of an energy storage and energy transfer system in accordance with a first embodiment of the invention.

Figure 2 shows the main components of an energy storage and energy transfer system in accordance with a second embodiment of the invention.

Figure 3 shows the main components of an energy storage and energy transfer system in accordance with a third embodiment of the invention.

Figure 4 shows an induction coil integrated in the thermal isolation material of the energy storage and energy transfer system shown in Figure 3.

Figure 5 shows a steam electric power plant which is connected to an energy storage and energy transfer system in accordance with a fourth embodiment of the invention.

Figure 6 illustrates how thermal energy is absorbed or released by a PCM when the PCM undergoes a phase change from solid to liquid or from liquid to solid.

Detailed Description

The illustration in the drawing is schematically. It is noted that in different figures, similar or identical elements are provided with the same reference signs. For the sake of conciseness identical elements which have already been explained with reference to a previous Figure will not be explained again when being comprised in a later Figure.

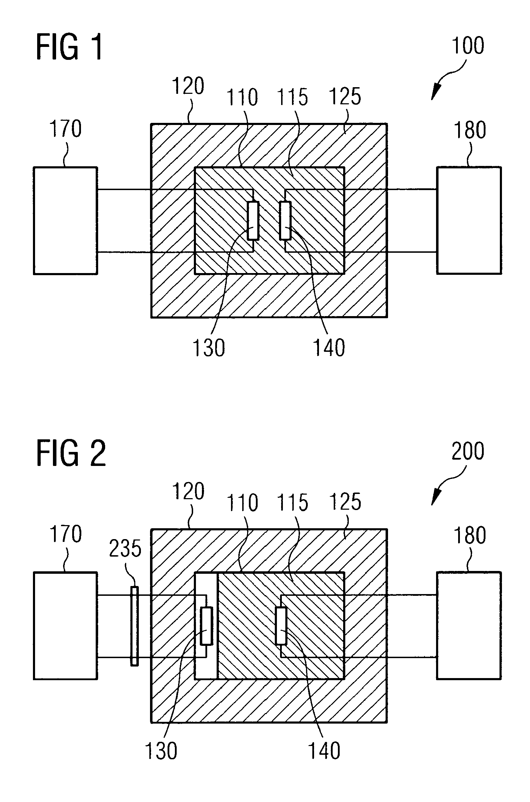

Figure 1 shows the main components of an energy storage and energy transfer system 100 in accordance with a first embodiment of the invention. A first container 110 comprising a PCM 115 is enclosed by a second container 120. The two containers 110, 120 are at least partly being thermally isolated from each other by a thermal isolation material 125.

At least one heat generation element 130 is receiving energy from an external energy source 170. The energy being received by the heat generation element 130 is used for heating the PCM 115. According to the embodiment described here the provided energy is electric energy, which is converted into thermal energy by the heat generation element 130. Further, at least one heat extraction element 140 is providing thermal energy to an external heat engine 180. This provided thermal energy is used for electricity production.

From the illustrated embodiment shown in Figure 1 it can be seen that the heat generation element 130 is in direct physical connection with the PCM 115. This allows for an effective heat transfer from the heat generation element 130 to the PCM 115 for instance if the heat generation element 130 is a conductive heater e.g. in the form of resistive heating elements and if the PCM 115 comprises or is a material with suitable thermal conductive properties.

It is mentioned that for the resistive heating elements, energy may be supplied to the elements as an AC- or a DC-voltage (and of course a corresponding AC- or DC-current).

Figure 2 shows the main components of an energy storage and energy transfer system 200 in accordance with a second embodiment of the invention. From Figure 2 it can be seen, that the heat generation element 130 is not in physical connection with the PCM 115. This will be an effective method of transferring heat to the PCM 115 if the element 130 comprises at least one inductive heating element. In this case energy is preferably supplied to the heat generation element 130 as an AC-voltage. Thereby, the frequency of the AC may be the frequency of a utility grid. In order to adapt the applied frequency a frequency controller 235 is provided. With this frequency controller 235 the frequency of the AC voltage can be scaled to another frequency than the frequency of the utility grid. The frequency may also for various embodiments be alternated during operation.

For an even further embodiment of the invention, the heat generation element 130 may be directly connected to the utility grid. Thereby, a surplus of energy on the utility grid can be provided to the system 200.

It is mentioned that the heat generation element 130 may be separated in a plurality of sub-elements. Further, the heat generation element 130 and/or the corresponding sub-elements may be one or more induction coils made of for instance copper.

Furthermore, the heat generation element 130 may be actively cooled e.g. by ventilating air or a applying a cooled fluid such as cooled water.

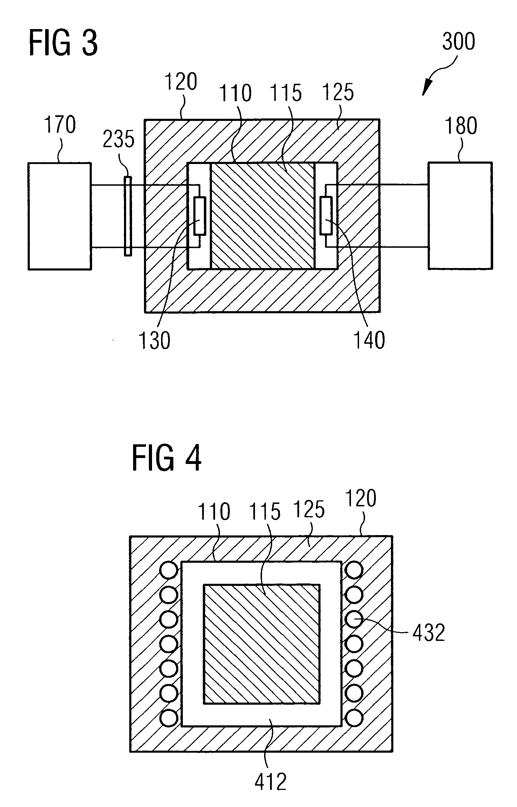

Figure 3 shows the main components of an energy storage and energy transfer system 300 in accordance with a third embodiment of the invention. As can be seen from Figure 3, the at least one heat extraction element 140, which is used for extracting thermal energy from the PCM 115, can be located such that it is not in direct physically contact with the PCM 115.

Figure 4 shows an induction coil 432, which may be integrated for instance in the thermal isolation material 125 of the energy storage and energy transfer system 300 shown in Figure 3. The windings of the induction coil 432 are not in direct physical contact with the PCM 115 to be heated, but are separated by some refractory material 412.

Figure 5 shows a steam electric power plant which is connected to an energy storage and energy transfer system 500 in accordance with a fourth embodiment of the invention. As can be seen from Figure 5, at least one heat extraction element 140 is connected to the PCM 115 and is providing energy to an external heat engine, which according to the described embodiment is a steam turbine 580.

The steam turbine 580 is used for electricity production. Water is fed into the heat extraction element 140 and is heated by the PCM 115. As the temperature of the PCM 115 may be higher than the boiling point of water, steam is generated and fed to the steam turbine 580. The steam enters the steam turbine 580 where it expands and pushes against blades to turn a generator shaft of an electric generator 582 to create electric current. After the steam has passed through the steam turbine 580, a condenser 585 convert it to water, which in turn is returned by non depicted pumps to the heat transfer element 140 as cold water in order to repeat the described thermodynamic cycle.

The generated electric current respectively the generated electric power is fed to a utility grid 590.

In order to recapitulate the above described embodiments of the present invention one can state: The system and the methods disclosed within this document relate to the storage of energy from an external source in a Phase Change Material (PCM) and to the release of at least a fraction of the stored energy to an external heat engine. The energy can be stored in a sensible energy storage process by temperature changes only i.e. where the ranges of the temperature changes in the PCM do not comprise the melting point temperature of the PCM. Alternatively and/or additionally, the energy can be stored in a latent energy storage process i.e. where the range of the temperature changes of the PCM comprises the melting point temperature of the PCM. Which particular energy storage process is used depends on the amount of energy which is supposed to be put into the system for storage. Once having supplied energy to the PCM for storage, a thermal isolation material, which at least partly encloses the PCM, ensures that only a limited energy is released to the surroundings during storage. A PCM is a substance with a high heat of fusion and is therefore capable of storing and releasing amounts of energy by exploiting that heat which is absorbed or released when a PCM experiences a phase change. In general, the energy storage can be achieved through either of solid-solid, solid-liquid, solid-gas, and liquid-gas phase changes. However, in practice changes from solid to liquid and back are currently preferred. Through an energy storage process, the PCM initially behaves as a sensible heat storage material i.e. the temperature of the PCM rises as it absorbs heat. When the temperature reaches the melting temperature of the PCM, the material absorbs large amounts of heat at a substantially constant temperature until the material entirely has become liquid. The release of energy is achieved by a reverse process where the material solidifies. Which material is preferred to be used for the PCM is dependent on the specific task and the properties of the material e.g. (a) melting temperature in the desired operating range, (b) high latent heat of fusion, (c) high conductivity, (d) rate of volume change on phase transformation, (e) chemical stability and/or (f) price. The PCMs can be organic or inorganic. For various embodiments of the invention, the PCM is Silicon (Si) or preferably Aluminum (Al) .

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. An energy transfer system for absorbing, temporarily storing and releasing energy, the energy transfer system (100, 200, 300, 500) comprising

   ● a first container (110) containing a Phase Change Material (115) ,
   ● a heat generation element (130), which is connectable to an external energy source (170) and which is capable of charging the Phase Change Material (115) with thermal energy, wherein energy provided by the external energy source (170) is used, and
   ● a heat extraction element (140), which is connectable to an external heat engine (180) and which is capable of extracting thermal energy from the Phase Change Material (115), wherein the external heat engine (180) is capable of converting the extracted thermal energy into electric energy.

2. The energy transfer system as set forth in the preceding claim, wherein
   the Phase Change Material (115) comprises a metal, in particular aluminium.

3. The energy transfer system as set forth in any one of the preceding claims, wherein
   the first container (110) is made at least partly from an iron alloy.

4. The energy transfer system as set forth in any one of the preceding claims, wherein
   the heat generation element (130) comprises an inductor (432) .

5. The energy transfer system as set forth in any one of the preceding claims, further comprising

   ● a second container (120), which encloses at least partly the first container (110), and
   ● a thermal insulation material (125), which in arranged in between the first container (110) and the second container (120) .

6. The energy transfer system as set forth in the preceding claim, wherein
   the thermal insulation material (125) comprises a composite ceramic material.

7. The energy transfer system as set forth in any one of the preceding claims, wherein
   at least a heating portion of the heat generation element (130) is in physical contact with the Phase Change Material (115) .

8. The energy transfer system as set forth in any one of the preceding claims, wherein
   at least an extracting portion of the heat extraction element (140) is in physical contact with the Phase Change Material (115) .

9. The energy transfer system as set forth in any one of the preceding claims, wherein
   the heat extraction element is a steam-liquid loop (140) of the external heat engine (180) and wherein
   the external heat engine (180) is a part of a power production system.

10. The energy transfer system as set forth in the preceding claim, wherein

the power production system comprises a control mechanism, which is adapted for controlling a fluid flow within the steam-liquid loop (140).

**11.** The energy transfer system as set forth in any one of the preceding claims, wherein
the energy provided by the external energy source (170) is electric energy and
the energy transfer system further comprises

● a frequency controller (235), which is adapted for controlling a frequency of a voltage and/or current being associated with the electrical energy provided by the external energy source (170).

**12.** An energy transfer arrangement for absorbing, temporarily storing and releasing energy, the energy transfer arrangement comprising

● a first energy transfer system (100, 200, 300, 500) as set forth in any one of the preceding claims and
● a second energy transfer system (100, 200, 300, 500) as set forth in any one of the preceding claims,
● wherein the first energy transfer system (100, 200, 300, 500) and the second energy transfer system (100, 200, 300, 500) are arranged parallel with respect to each other.

**13.** The energy transfer arrangement as set forth in the preceding claim, wherein
the heat generation element (130) of the first energy transfer system (100, 200, 300, 500) and the heat generation element (130) of the second energy transfer system (100, 200, 300, 500) are connected with each other and are connectable to the external energy source (170) and/or
heat extraction element (140) of the first energy transfer system (100, 200, 300, 500) and the heat extraction element (140) of the second energy transfer system (100, 200, 300, 500) are connected with each other and are connectable to the external heat engine (180) .

**14.** A method for absorbing, temporarily storing and releasing energy, the method comprising

● charging a Phase Change Material (115) with thermal energy, wherein the Phase Change Material (115) is contained within a first container (110) and wherein the thermal energy is introduced to the Phase Change Material (115) by a heat generation element (130), which is connected to an external energy source (170) and which receives energy from the external energy source (170),
● temporarily storing the thermal energy within the Phase Change Material (115),
● extracting thermal energy from the Phase Change Material (115) by a heat extraction element (140), which is connected to an external heat engine (180),
● transferring the extracted thermal energy to the external heat engine (180), and
● converting the transferred thermal energy into electric energy by the external heat engine (180).

FIG 1

100

120  110  115  125

170  180

130  140

FIG 2

200

120  110  115  125

170  235  180

130  140

FIG 3

FIG 4

## FIG 5

125 115 140 412

500

502

580

582

590

Steam

Water

585

## FIG 6
PRIOR ART

$T$

$Tf$

$Tm$

$Ti$

$\Delta hm$

$h$

Europäisches
Patentamt

European
Patent Office

Office européen
des brevets

## EUROPEAN SEARCH REPORT

Application Number

EP 10 15 6250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/276616 A1 (FLYNN BRIAN J [US] ET AL) 13 November 2008 (2008-11-13) <br> * figures 12-14 * <br> * figure 10 * | 1-14 | INV. <br> F28D20/02 |
| X | US 4 037 579 A (CHUBB TALBOT A) 26 July 1977 (1977-07-26) <br> * figures 1,2 * | 1-3, 7-10,14 | |
| X | DE 28 47 989 A1 (SOELCH ROLAND) 14 May 1980 (1980-05-14) <br> * the whole document * | 1-4,7,8, 14 | |
| X | WO 2006/072185 A1 (NEW WORLD GENERATION INC [CA]; NAYEF DURAID S [CA]; NAYEF NA AL S [CA]) 13 July 2006 (2006-07-13) <br> * the whole document * | 1,3,4, 9-11,14 | |
| X | DE 103 26 027 A1 (DEUTSCH ZENTR LUFT & RAUMFAHRT [DE]) 30 December 2004 (2004-12-30) <br> * figure 1 * | 1,9,14 | TECHNICAL FIELDS SEARCHED (IPC) |
| X | US 2008/289793 A1 (GEIKEN GERALD [US] ET AL) 27 November 2008 (2008-11-27) <br> * figure 3 * | 1,14 | F28D |
| X | EP 2 096 305 A1 (SOPHIA ANTIPOLIS EN DEV [FR]) 2 September 2009 (2009-09-02) <br> * the whole document * | 1,14 | |
| X <br> A | US 4 088 183 A (ANZAI SHUNICHI ET AL) 9 May 1978 (1978-05-09) <br> * figure 2 * | 1 <br> 5 | |

The present search report has been drawn up for all claims

| Place of search | Date of completion of the search | Examiner |
|---|---|---|
| Munich | 25 October 2010 | Vassoille, Bruno |

EPO FORM 1503 03.82 (P04C01)

## ANNEX TO THE EUROPEAN SEARCH REPORT
## ON EUROPEAN PATENT APPLICATION NO.

EP 10 15 6250

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2010

| Patent document cited in search report | | Publication date | Patent family member(s) | | Publication date |
|---|---|---|---|---|---|
| US 2008276616 | A1 | 13-11-2008 | WO | 2010009053 A2 | 21-01-2010 |
| US 4037579 | A | 26-07-1977 | NONE | | |
| DE 2847989 | A1 | 14-05-1980 | NONE | | |
| WO 2006072185 | A1 | 13-07-2006 | US | 2008134681 A1 | 12-06-2008 |
| DE 10326027 | A1 | 30-12-2004 | NONE | | |
| US 2008289793 | A1 | 27-11-2008 | WO | 2008147840 A1 | 04-12-2008 |
| EP 2096305 | A1 | 02-09-2009 | FR | 2927959 A1 | 28-08-2009 |
| | | | US | 2009211249 A1 | 27-08-2009 |
| US 4088183 | A | 09-05-1978 | NONE | | |

EPO FORM P0459

For more details about this annex : see Official Journal of the European Patent Office, No. 12/82